(19) Europäisches Patentamt
European Patent Office
Office européen des brevets

(11) **EP 3 725 828 A1**

(12) **EUROPEAN PATENT APPLICATION**
published in accordance with Art. 153(4) EPC

(43) Date of publication:
**21.10.2020 Bulletin 2020/43**

(21) Application number: **18887321.0**

(22) Date of filing: **14.12.2018**

(51) Int Cl.:
*C08J 9/06* *(2006.01)*    *B60C 11/00* *(2006.01)*
*C08K 3/04* *(2006.01)*    *C08K 3/36* *(2006.01)*
*C08L 21/00* *(2006.01)*    *C08L 61/04* *(2006.01)*

(86) International application number:
**PCT/JP2018/046141**

(87) International publication number:
**WO 2019/117293 (20.06.2019 Gazette 2019/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.12.2017 JP 2017239877**

(71) Applicant: **Bridgestone Corporation
Chuo-Ku
Tokyo 104-8340 (JP)**

(72) Inventors:
• **OISHI, Shigeki
Tokyo 104-8340 (JP)**
• **KAJI, Yoshio
Tokyo 104-8340 (JP)**

(74) Representative: **Oxley, Robin John George
Marks & Clerk LLP
15 Fetter Lane
London EC4A 1BW (GB)**

(54) **TIRE**

(57) In order to make it possible to maintain a low dynamic storage modulus at low temperatures in a tread rubber, which is the portion of a tyre to be in contact with a road surface, i.e., to allow the rubber to remain soft, without changing in the dynamic storage modulus at normal temperature of the tread rubber, provided is a tyre including a foamed rubber on a surface of a tread rubber, the foamed rubber being constituted from a rubber composition in which a phenol resin is blended.

EP 3 725 828 A1

**Description**

Technical Field

The present invention relates to tyres. More particularly, the present invention relates to pneumatic tyres.

Background Art

In winter pneumatic tyres, sipes extending in the width direction of blocks of the tyre tread have been traditionally imparted in order to ensure ice/snow performance. However, imparting sipes reduces the block rigidity, leading to deterioration of normal road performance. Another method of ensuring on-ice performance is a method of using a foaming technique. However, also in this case, block rigidity is insufficient, and normal road performance is sacrificed.
As a method of achieving both on-ice performance and normal road performance, it is contemplated to combine a foaming technique with a rubber having a high elastic modulus . However, even when the rubber having a high elastic modulus was foamed, the desired normal road performance has not been ensured.
Generally, for example, in studless tyres, which are tyres having improved winter performance, followability of the tyres to the road surface becomes insufficient if the dynamic storage modulus (G') of the tread at low temperatures is large. Here, the low temperature is a temperature during traveling on ice, and a temperature of about -20°C to 0°C is considered as a typical example. At low temperatures, the adhesion effect between the tread and the road surface is reduced due to a decrease in the real contact area and the like, and the braking performance on ice of the tyre is reduced. Therefore, the dynamic storage modulus of the tread at low temperatures is preferably lowered.
That is, unless the rubber composition has a certain flexibility, the adhesion of the tread rubber to the road surface on ice cannot be maintained. Thus, to date, it is natural to use a soft rubber as the foamed rubber for studless tyres, and a hard rubber having a high elastic modulus has not been used.
Regarding the above problems, as a studless tyre for all seasons, there is known an example of a pneumatic tyre which comprises a foamed rubber in a tread, the foamed rubber containing, based on 100 parts by mass of the rubber component, from 5 to 30 parts by mass of a resin that may form a polymer alloy with a rubber or a resin that may be co-crosslinked with a rubber, the resin having a hardness of 40° or more as measured by ASTM Shore D and having an average particle size of 10 to 400 $\mu$m, and having closed cells in which the expansion ratio is 5 to 30% and the average particle size of the resin is from 0.5 to 5 times the average expansion diameter, the foamed rubber having a storage modulus (E') at -20°C in a range from $6.0 \times 10^7$ to $20 \times 10^7$ dyn/cm$^2$. (Patent Document 1)
However, the use of a phenol resin as a thermosetting resin in the rubber composition used for the tread rubber of the tyre is not disclosed in Patent Document 1.

Prior art documents

Patent document

Patent Document 1: Japanese Patent Application Laid-Open No. Hei. 8-300904 (claims, examples, and others)

Summary of Invention

Problems to be solved by the invention

The present invention has been made in view of the problems and the current state of the known art described above and is intended to solve problems. An object of the present invention is to provide a tyre comprising a foamed rubber made of a rubber composition in which a phenol resin is blended at least on the surface of the tread rubber, that is, on a portion to be in contact with the road surface during contact with the ground, the tyre thus enabling a low-temperature (0°C) dynamic storage modulus to be kept low (the rubber to remain soft) without changing a normal-temperature (30°C) dynamic storage modulus of the tread rubber.

Means to solve the problems

The present inventor has conducted intensive studies on the above-described known problems and the like and, as a result, has found that both on-ice performance and normal road performance can be achieved with a tyre including a phenol resin blended and having foamed holes at a portion of the tread rubber to be in contact with the road surface. That is, the present inventor has found that use of a phenol resin in a foamed rubber forming a tread rubber enables a low-temperature (0°C) dynamic storage modulus to be kept low without changing a normal-temperature (30°C) dynamic storage modulus of the tread rubber, that is, a rubber composition to remain soft, thereby completing the present invention.

In other words, the present invention resides in the following (1) to (7).

(1) A tyre including a foamed rubber on a surface of a tread rubber, the foamed rubber being constituted from a rubber composition in which a phenol resin is blended.

(2) The tyre described in the above (1), wherein a methylene donor is blended as a curing agent in the rubber composition.

(3) The tyre described in the above (1) or (2), wherein an expansion ratio of the rubber composition is from 0.1 to 50%.

(4) The tyre described in any one of the above (1) to (3), including 1.0 to 20 parts by mass of a blowing agent based on 100 parts by mass of a rubber component in the rubber composition.

(5) The tyre described in any one of the above (1) to (4), including 30 to 100 parts by mass of carbon black and/or silica in a total amount based on 100 parts by mass of the rubber component in the rubber composition.

(6) The tyre described in any one of the above (1) to (5), including a hydrophilic short fibre.

(7) The tyre described in any one of the above (2) to (6), wherein the methylene donor is hexamethylene tetramine and/or hexamethoxymethyl melamine.

Effects of the invention

According to the present invention, it is possible to provide a studless tyre for all seasons, the tyre for all seasons having excellent on-ice performance in winter due to a foaming technique and having high normal road performance due to high elastic modulus thereof. The tyre of the present invention is provided, particularly, in contemplation of an environment where a water layer exists between an ice and snow road surface and a tyre, such a time as after a slight snowfall in an urban area or a period just before spring having a large amount of the thawed snow.

Embodiments of the invention

An embodiment of the present invention is described below in detail.

The tyre of an embodiment of the present invention is a tyre in which a foamed rubber made of a rubber composition is used in at least a portion of the tread to be in contact with the road surface, a phenol resin being blended as a thermosetting resin in the rubber composition.

[Tyre]

The tyre of the present invention is a pneumatic tyre. The tyre of the present invention can be used as a tyre for all seasons by achieving both on-ice performance and normal road surface performance.

The tread of the tyre of an embodiment of the present invention may be provided with a structure such as a sipe.

[Tread Rubber]

The surface of the tread rubber of the tyre of the present invention, at least a portion to be in contact with the road surface, is formed of foamed rubber.

The foamed rubber has a 30°C dynamic storage modulus 10% G' of preferably from 1.5 to 2.6 MPa, sequentially, more preferably from 1.52 to 2.55 MPa, from 1.56 to 2.47 MPa, from 1.62 to 2.42 MPa, even more preferably from 1.67 to 2.3 MPa, particularly preferably in the range from 1.7 to 2.2 MPa. The -20°C dynamic storage modulus 1% G' is preferably from 0.8 to 126 MPa and more preferably from 1.5 to 80 MPa.

When the 30°C dynamic storage modulus 10% G' is within the range described above, it is more likely to achieve normal road surface performance in seasons other than winter, particularly in the summer season. In addition, when the -20°C storage modulus 1% G' is within the range described above, it is more likely to achieve performance on winter road surfaces, and when both the ranges of the 30°C storage modulus 10% G' and of the -20°C storage modulus of 1% G' are within the ranges described above, it is possible to exhibit high performance as a tyre for all seasons.

[Foam Cavity]

The maximum diameter of foam cavities present in the foamed rubber constituting the tread rubber of the tyre of the present invention is preferably from 30 to 100 μm.

[Rubber Composition]

The rubber composition relating to the tread portion of the tyre of the present invention, particularly the rubber composition on the surface portion, is not particularly limited as long as the rubber composition includes a phenol resin as a thermosetting resin.

The rubber composition constituting the entire tread portion, including the tread surface of the tyre of the present invention, includes components such as a rubber component, a blowing agent, a thermosetting resin, a curing agent, silica, carbon black, a softening agent, and a crosslinking agent including a vulcanizing agent, a vulcanization accelerator, and a hydrophilic short fibre, that are appropriately blended.

The rubber component contained in the rubber composition includes a diene rubber or a butyl rubber, or a mixture of a diene rubber and a butyl rubber. Examples of the diene rubber include natural rubber (NR), polyisoprene rubber (IR), styrene-butadiene copolymer rubber (SBR), polybutadiene rubber (BR), and ethylene-propylene copolymer. One of these diene rubber components may be used alone, or two or more of these may be blended and used. Among these, it is particularly preferable to blend styrene-butadiene copolymer rubber (SBR) and further natural rubber (NR) and/or polyisoprene rubber (IR), from the viewpoint of securing normal road performance.

Further, as the synthetic diene rubber contained in the rubber component, it is possible to use a modified diene rubber having a functional group containing an element selected from tin, nitrogen, and silicon at a polymer end.

In the case where the functional group to be introduced into the modified diene-based rubber is a functional group containing tin, examples thereof include a functional group such as a trihalostannyl group, a dihaloalkylstannyl group, a dihaloarylstannyl group, a halodialkylstannyl group, a halodiarylstannyl group, a trialkylstannyl group, and a triarylstannyl group. The halogen atom on tin is a fluorine atom, a chlorine atom, or a bromine atom. In the case of a functional group containing nitrogen, examples thereof include a functional group such as an isocyanato group, an amino group, a primary amino group, a secondary amino group, an amide group, an imide group, and additionally, a nitrogen-containing heterocyclic functional group. In the case of a functional group containing silicon, examples thereof include a functional group such as a trialkoxysilyl group, a dialkoxyalkylsilyl group, a dialkoxyarylsilyl group, an alkoxydialkylsilyl group, an alkoxydiarylsilyl group, a trialkylsilyl group, and a triarylsilyl group. In the case where such functional groups have an alkyl group or an aryl group, the alkyl group or aryl group is a linear-chain alkyl group having from 1 to 8 carbon atoms, a branched alkyl group having from 3 to 8 carbon atoms, a cyclic alkyl group having 5 to 8 carbon atoms, or an aryl group containing an aromatic ring having from 6 to 14 carbon atoms. Such an alkyl group or aryl group may be substituted with a substituent such as a hydroxyl group, an alkoxy group, an acyl group, an amino group, a primary amino group, a secondary amino group, a nitro group, a nitroso group, a mercapto group, a sulfo group, and a halogen atom. Alternatively, in the case of an alkoxy group, the alkoxy group has the hydrocarbon group described above, which is an alkyl group or an aryl group.

It is possible to inhibit a decrease in the elastic modulus due to a rise in temperature as well as to improve the low exothermic property in a carbon black-blended rubber composition by use of the modified diene rubber described above.

Further, components such as various fillers and additives are further used in the rubber composition.

[Phenol resin]

The rubber composition relating to the tread portion of the tyre of the present invention contains a thermosetting resin. The thermosetting resin is not particularly limited as long as the thermosetting resin has a certain compatibility with the rubber component and does not compromise crack growth resistance.

A thermosetting resin such as a phenol resin and a melamine resin is used for the rubber composition. Among the thermosetting resins, a phenol resin is preferable.

In the rubber composition, the thermosetting resin is preferably contained in an amount from 5 to 30 parts by mass and more preferably from 5 to 15 parts by mass based on 100 parts by mass of the rubber component.

There may be used a resin that polymerizes and crosslinks the thermosetting resin polymer contained in the rubber composition constituting the tread portion of the tyre of the present invention by a curing agent, specifically, for example, a polymer crosslinkable by a methylene donor such as a polyvalent methylol melamine derivative as a curing agent described below.

Examples of the phenol resin further include resins such as a phenol-formaldehyde resin, a resorcin-formaldehyde resin, and a cresol resin.

In addition to the 100% phenol resin, the phenol resin may be a resin such as a natural resin-modified phenol resin or an oil-modified phenol resin.

The phenol resin can enhance the elasticity of the rubber while suppressing a decrease in the fracture resistance of the rubber. The low exothermic property of the rubber composition relating to the tyre of the present invention may be improved by enhancing the elasticity.

Examples of the phenol resin include, in addition to the phenol resin described above, specifically, resins such as a novolak-type phenol resin, a novolak-type cresol resin, a novolak-type xylenol resin, a novolak-type resorcinol resin, or a resin obtained by oil-modifying these resins. One of the resins can be used alone, or a plurality of the resins may be used.

When the phenol resin is oil-modified, examples of the oil used include oils such as rosin oil, tall oil, cashew oil, linoleic acid, oleic acid, and linolenic acid. At least one or two or more of these oils may be used.

The molecular weight of the thermosetting resin contained in the rubber composition constituting the tread portion of the tyre of the present invention is not particularly limited as long as the effect of enhancing the crack growth resistance is exerted.

When a resin already polymerized is polymerized again with a curing agent to obtain the thermosetting resin, the molecular weight of the resin before the reaction with the curing agent may be as low as that of an oligomer for improving the compatibility with the rubber component.

[Curing Agent]

The curing agent may be one that forms a network-like matrix in the thermosetting resin with a methylene donor or the like to restrict motions such as stretching of the rubber polymer. And thereby, the rubber composition to have a low exothermic property may be allowed. Specific examples of the curing agent as a methylene donor include hexamethylene tetramine and hexamethoxymethyl melamine.

The resin and the curing agent can be optionally selected without departing from the purpose of the present invention, and a plurality of the resins and a plurality of the curing agents may be selected.

Furthermore, a curing agent before the reaction may be contained and used in the resin.

The curing agent to be used in the present invention is blended together with a thermosetting resin. In the case where the thermosetting resin is polymerized and crosslinked, examples of the curing agent used in the present invention include methylene donors such as hexamethylene tetramine, compounds that serves as a methylene donor among polyvalent methylolmelamine derivatives such as hexamethoxymethyl melamine (HMMM), and compounds such as oxazolidine derivatives, polyvalent methylolated acetylene urea, acetaldehyde ammonia, $\alpha$-polyoxymethylene, and para-formaldehyde. At least one of the compounds is preferably used. As the curing agent used in the present invention, a polyvalent methylolmelamine derivative is more preferably used, and from the perspective of a high curing rate and the like, hexamethoxymethyl melamine is more preferably used.

The content of the curing agent such as the methylene donor is usually from 3 to 20% by mass and preferably from 5 to 15% by mass based on 100% by mass of the total amount of the phenol resin and the methylene donor (the total amount of the resin and the curing agent). When the content of the curing agent such as the methylene donor is less than 3% by mass, curing of the phenol resin or the like may not proceed sufficiently. In contrast, when the content exceeds 20% by mass, the crosslinking system of the rubber may be adversely affected.

Use of a phenol thermosetting resin causes crosslinking by the thermosetting resin to proceed simultaneously during crosslinking by rubber vulcanization, and the dynamic storage modulus sufficiently increases.

[Silica]

In the rubber composition of the present invention, silica is used as a reinforcing filler besides carbon black. The silica is not particularly limited, and can be optionally selected from those routinely used as reinforcing fillers for rubber. Examples of the silica include wet silica (hydrous silicate), dry silica (silicic anhydride), calcium silicate, and aluminum silicate, and among silica, wet silica is preferable. Preferable examples of the wet silica include AQ, VN3, LP, and NA manufactured by Tosoh Silica Corporation, and ULTRASIL VN3 manufactured by Degussa AG.

The amount of the silica blended is from 5 to 15 parts by mass and preferably from 10 to 15 parts by mass based on 100 parts by mass of the rubber component.

Although silica is used in the rubber composition of the present invention, it is not necessary to blend a silane coupling agent. Even if a silane coupling agent is added, no effect on the improvement of wear is observed.

In the present application, the CTAB specific surface area of silica is measured in compliance with ISO 5794 using cetyltrimethyl ammonium bromide (CTAB), and is represented by the surface area per unit weight: $m^2/g$.

The CTAB specific surface area of the silica used in the present invention is not particularly limited, but the lower limit is sequentially, more preferably from 20 $m^2/g$ or more, 50 $m^2/g$ or more, 100 $m^2/g$ or more, even more preferably 150 $m^2/g$ or more, and particularly preferably 160 $m^2/g$ or more. On the other hand, the upper limit is preferably 300 $m^2/g$ or less, more preferably 250 $m^2/g$ or less, and even more preferably 200 $m^2/g$ or less.

The BET specific surface area of the silica is not particularly limited, and is, for example, sequentially, preferably in the range from 40 to 350 $m^2/g$, from 80 to 300 $m^2/g$, from 150 to 280 $m^2/g$, more preferably from 170 to 270 $m^2/g$, and particularly preferably from 190 to 250 $m^2/g$.

The method for producing the silica used in the rubber composition of the tyre the present invention is not particularly limited as long as it satisfies the conditions regarding the CTAB specific surface area described above, and known ones can be widely used. Examples include silicas such as silicic anhydride obtained by a dry method, hydrous silicic acid obtained by a wet method, and synthetic silicate. The examples also include silica obtained from a silane coupling agent.

The content of the silica in the rubber composition the present invention is, as the lower limit, preferably 30 parts by mass or more and more preferably 40 parts by mass or more based on 100 parts by mass of the rubber component. On the other hand, the upper limit is sequentially, preferably 110 parts by mass or less, 100 parts by mass or less, 90 parts by mass or less, more preferably 80 parts by mass or less, even more preferably 70 parts by mass or less, and particularly preferably 60 parts by mass or less.

With respect to the rubber composition according to the tyre the present invention, it is possible to improve the low exothermic property without reducing the crack growth resistance by using fine-particle-size silica having a large CTAB specific surface area in a system in which the thermosetting resin in the rubber composition is cured. Usually, fine-particle-size silica is not blended in a rubber composition having a low exothermic property. With respect to the rubber composition according to the tyre of the present invention, the presence of the thermosetting resin, the curing agent, and carbon black leads to enhancement in the low exothermic property in the rubber composition containing fine-particle-size silica.

Furthermore, in the rubber composition according to the tyre of the present invention, the low exothermic property is further enhanced in the rubber composition by using carbon black having a CTAB specific surface area smaller than a specific value and having a large particle size, which will be described below.

[Carbon Black]

Carbon black may be included in the rubber composition according to the tyre of the present invention.

In the rubber composition, carbon black is preferably contained in an amount of 1 to 50 parts by mass, more preferably 5 to 50 parts by mass, and even more preferably 10 to 35 parts by mass based on 100 parts by mass of the rubber component. When the content of carbon black is excessively high, there is a problem in that the exothermic property increases.

The CTAB specific surface area of carbon black is measured in compliance with ISO 6810 using cetyltrimethyl ammonium bromide (CTAB), and is represented by the surface area per unit weight: $m^2/g$.
The rubber composition according to the tyre of the present invention contains carbon black. The CTAB specific surface area of carbon black that can be used in the rubber composition is not particularly limited. The CTAB specific surface area is preferably 25 $m^2/g$ or more and 150 $m^2/g$ or less.

The carbon black preferably has a nitrogen adsorption specific surface area ($N_2SA$) of 30 to 200 $m^2/g$.

It is possible to achieve both the reinforcing property and appropriate flexibility of the rubber composition by using carbon black having an $N_2SA$ from 30 to 200 $m^2/g$.

If the nitrogen adsorption specific surface area ($N_2SA$) exceeds 200 $m^2/g$, the hardness of the rubber after vulcanization becomes high, and thus sufficient anti-slip properties cannot be obtained. In the case where the nitrogen adsorption specific surface area ($N_2SA$) is less than 30 $m^2/g$, the reinforcing property of the rubber decreases, and thus sufficient wear resistance cannot be obtained. From a similar perspective, the $N_2SA$ of the carbon black is sequentially, more preferably from 50 to 180 $m^2/g$, from 80 to 170 $m^2/g$, from 90 to 165 $m^2/g$, from 100 to 150 $m^2/g$, from 110 to 149 $m^2/g$, even more preferably from 115 to 149 $m^2/g$, and particularly preferably from 118 to 149 $m^2/g$.

The nitrogen adsorption specific surface area can be measured by a single-point procedure in compliance with ISO 04652-1. For example, after degassed carbon black is immersed in liquid nitrogen, the amount of nitrogen adsorbed on the carbon black surface at the time of equilibrium is measured. The nitrogen adsorption specific surface area ($m^2/g$) can be calculated from the measured value.

When the particle diameter is excessively large, the wear resistance is inferior, and when excessively small, the low loss property deteriorates.

The rubber composition according to the tyre of the present invention contains carbon black and/or silica in a total amount from 30 to 100 parts by mass and preferably from 50 to 80 parts by mass based on 100 parts by mass of the rubber component in the rubber composition.

The rubber composition according to the tyre of the present invention may contain, as a reinforcing filler, an inorganic filler such as an alumina filler, in addition to carbon black or silica.

[Softening Agent]

The rubber composition of the present invention may include an oil such as aroma oil or spindle oil, and a resin for softening agent. In addition, the softening agent in the present application includes an oil as an extending oil for the rubber component, in addition to the oil and resin as blend components.

[Vulcanization Accelerator]

Examples of the vulcanization accelerator used in the rubber composition of the present invention include vulcanization accelerators of thiazole compounds, such as M (2-mercaptobenzothiazole), DM (dibenzothiazolyl disulfide), and CZ (N-cyclohexyl-2-benzothiazolyl sulfenamide); vulcanization accelerators of thiuram compounds, such as TT (tetramethylthiuram sulfide); and vulcanization accelerators of guanidine compounds, such as diphenylguanidine (DPG).

[Crosslinking Agent]

The rubber composition of the present invention contains a vulcanizing agent such as sulfur as a crosslinking agent.

Furthermore, other crosslinking agents may be used in combination. The crosslinking agent is not particularly limited as long as the crosslinking agent is a compound having at least two functional groups that react with rubber molecules. The functional groups are preferably functional groups having polymerisation reactivity and/or addition reactivity to rubber molecules. The amount of the compound blended is preferably added in a proportion from 0.01 to 3 parts by mass based on 100 parts by mass of the rubber component.

In a case where the amount of the crosslinking agent added exceeds 3 parts by mass, the ultrahigh molecular weight components having a molecular weight of more than 50000000 in the rubber increases, which adversely affects processability of the rubber composition. From such a perspective, the proportion is 3 parts by mass or less, preferably 2.5 parts by mass or less, and even more preferably 2.2 parts by mass or less. Alternatively, if the amount of the crosslinking agent added is less than 0.01 parts by mass, it is not possible to sufficiently polymerize the rubber component.

The crosslinking agent having a polymerisation reaction functional group and/or an addition reaction functional group is not limited in the present invention as long as the crosslinking agent causes rubber components to be secondary or tertiary structure crosslinked to each other. Examples of the polymerisation reaction functional group include a functional group such as a vinyl group, and examples of the addition reaction functional group include a functional group such as a hydrazide group and a thiol group. Any of polymerisation reaction functional groups and addition reaction functional groups may be used in combination. In particular, divinyl compounds, dihydrazide compounds, and dithiol compounds are preferable.

A divinyl compound is a compound having two vinyl groups and usually reacts with double bonds in rubber molecules.

A crosslinking compound having a polymerisation reaction functional group such as a divinyl compound may lead to problems such as bonding between crosslinking compounds and other grafting depending on the amount of the polymerisation initiator, and thus may grow rubber ultra-macromolecule. For this reason, the polymerisation initiator used is preferably in an amount of 1 part by mass or less based on 100 parts by mass of the rubber component. In particular, a range from 0.5 to 0.05 parts by mass is preferable.

In a case where the amount of the polymerisation initiator added exceeds 1 part by mass, the ultra-high molecular weight component in the rubber component will increase, which adversely affects processability. Alternatively, if the amount of the polymerisation initiator added is less than 0.05, it is not possible to sufficiently polymerize the rubber component.

The divinyl compounds are compounds which have two vinyl groups or two groups containing a vinyl group (hereinafter referred to as Vn) and which are represented by the general formula $(Vn)_2R$, and particularly, compounds obtained by ester-bonding of a compound having two or more vinyl groups or two or more groups containing a vinyl group to an inorganic acid, a compound having two or more dibasic acids, a compound having two or more hydroxyl groups, or a compound having two or more dibasic salts (an amino group or an amide group), for example, compounds that can be represented by general formula: Vn-(O=)S-(=O)-Vn, the general formula: Vn-O-(O=)C-R-C(O=)-O-Vn, the general formula: Vn(O=)C-O-R-O-C(=O)Vn, and the general formula: Vn(O=)C-NH-R-NH-C(=O)Vn.

Vn is a vinyl group or a group containing a vinyl group and may differ from each other, and R is an alkylene group such as a methylene group, an ethylene group, or a propylene group, a cycloalkylene group, a phenylene group, a naphthalene group, or a carbon chain obtained by combining thereof, having from 1 to 20 carbon atoms in total. Also, R may be a carbon chain having oxygen, nitrogen, sulfur, a halogen element and/or a substituent containing these elements therein as long as R is one generally and practically produced and used.

Examples of the divinyl compound having vinyl groups directly bonded by substitution include compounds such as divinylbenzene and divinylnaphthalene.

Also, examples of the compounds obtained by ester bonding of vinyl groups or vinyl compounds include compounds such as divinylsulfone, divinyl oxalate, divinyl adipate, divinyl azelate, divinyl sebacate, divinyl eicosanedionate, divinyl dodecanoate, divinyl terephthalate, N,N'-methylenebisacrylamide, and N,N'-ethylenebisacrylamide.

Further, examples of the crosslinking agent having an addition reaction functional group can include compounds such as diamino compounds, dihydroxyl compounds, dihydrazide compounds, and dithiol compounds, and such crosslinking agents are subjected to nucleophilic or electrophilic addition reaction with a double bond, a carbonyl group, or the like in the rubber molecules. From the perspective of reactivity and the like, dihydrazide compounds and dithiol compounds are preferable.

The dihydrazide compound is represented by the general formula: $H_2NNHC(=O)-R-C(=O)-NHNH_2$, where R is an alkylene group such as a methylene group, an ethylene group, or a propylene group, a cycloalkylene group, a phenylene group, a naphthalene group, or a carbon chain obtained by combining some of these groups, having from 1 to 20 carbon atoms. Also, R may be a carbon chain having oxygen, nitrogen, sulfur, a halogen element and/or a substituent containing these elements therein as long as R is one generally and practically produced and used.

Specific examples of the dihydrazide compounds can include phthalic dihydrazide, isophthalic dihydrazide, terephthalic dihydrazide, 1,3-bis(hydrazinocarboethyl)-5-isopropylhydantoin, succinic dihydrazide, adipic dihydrazide, azelaic dihydrazide , sebacic dihydrazide, eicosanedioic dihydrazide, dodecanoic dihydrazide, 7,11-octadecadien-1,18-dicarbohydrazide, and oxalic dihydrazide.

The dithiol base compounds are compounds that have two thiol groups or two groups containing a thiol group (hereinafter, referred to as SH), are represented by the general formula $R(SH)_2$, and have high dispersibility into the rubber component.

SH is a thiol group or a group containing a thiol group and may differ from each other, and R is an alkylene group such as a methylene group, an ethylene group, or a propylene group, a cycloalkylene group, a phenylene group, a naphthalene group, or a carbon chain obtained by combining some of these groups, having from 1 to 20 carbon atoms in total. Also, R may be a carbon chain having oxygen, nitrogen, sulfur, a halogen element and/or a substituent containing these elements therein as long as R is one generally and practically produced and used.

Specific examples of the thiol compound include compounds such as 2,3-dithiol-1-propanol, ethylene bis(thiol acetate), meso-2,3-dithiol succinic acid, and bis(2-thiol ethyl) ether.

[Hydrophilic Short Fibres]

The rubber composition constituting the tread of the tyre according to an embodiment of the present invention may contain hydrophilic short fibres as a filler.

Such short fibres can produce effects such as viscosity adjustment. Additionally, it is possible to enhance the compatibility with hydrophilic fillers such as silica by making hydrophilic of such short fibres.

The hydrophilic short fibres included in the rubber composition may be polyester, carbon fibre, which are made to hydrophilic.

In the case where the rubber composition contains the hydrophilic short fibres and a blowing agent mentioned below, gas generated from the blowing agent during vulcanization may penetrate into the interior of the hydrophilic short fibres and form gas bubbles having a shape corresponding to the shape of the hydrophilic short fibres. Additionally, in the air bubbles, wall surface thereof is covered with a resin derived from hydrophilic short fibres and made to hydrophilic. For this reason, when a tyre is produced by using the rubber composition containing the hydrophilic short fibres and the blowing agent in the tread, the wall surface of the gas bubbles is exposed to the tread surface in use of the tyre to thereby improve the affinity to water. As a result, the air bubbles can actively take in water, and the tyre is imparted with excellent drainage properties to enable on-ice performance of the tyre to be significantly improved.

Examples of hydrophilic resins to be used as materials for the hydrophilic short fibres include ethylene-vinyl alcohol copolymers, polyvinyl alcohol, polyvinyl acetate, poly(meth)acrylic acid or esters thereof, polyethylene glycol, carboxyvinyl copolymers, styrene-maleic acid copolymers, polyvinylpyrrolidone, vinylpyrrolidone-vinyl acetate copolymers, and mercaptoethanol. Of the resins, ethylene-vinyl alcohol copolymers, polyvinyl alcohol, polyvinyl acetate, and poly (meth) acrylic acid are preferable, and ethylene-vinyl alcohol copolymers are particularly preferable.

On the surface of the hydrophilic short fibres, there may be formed a coating layer that is formed from a low-melting-point resin having an affinity to the diene polymer and preferably having a melting point lower than the highest vulcanization temperature of the rubber composition. Formation of such a coating layer allows the affinity to water contained in the hydrophilic short fibres to be effectively retained as well as makes the affinity between the coating layer and the diene-based polymer satisfactory to thereby improve the dispersibility of the short fibres into the diene polymer. In addition, the low-melting-point resin melts during vulcanization to form a flowable coating layer, which contributes to adhesion between the diene polymer and the hydrophilic short fibres. Thus, it is possible to easily achieve a tyre with satisfactory drainage properties and durability. The thickness of the coating layer may vary depending on the amount of hydrophilic short fibres blended, average diameter of hydrophilic short fibres, and the like, but is usually from 0.001 to 10 $\mu$m and preferably from 0.001 to 5 $\mu$m.

The melting point of the low-melting-point resin used in the coating layer is preferably lower than the highest vulcanization temperature of the rubber composition. The highest temperature of vulcanization means the highest temperature at which the rubber composition reaches during vulcanization of the rubber composition. For example, in the case of mold vulcanization, the highest temperature of vulcanization means the highest temperature at which the rubber composition reaches during a period from the entry of the rubber composition into the mold to the removal of the rubber composition from the mold for cooling. The highest vulcanization temperature can be measured, for example, by embedding a thermocouple in the rubber composition. The upper limit of the melting point of the low-melting-point resin, although not particularly limited, is preferably selected in consideration of the above points. In general, the upper limit is preferably lower than the highest vulcanization temperature of the rubber composition preferably by at least 10°C and more preferably by at least 20°C. The industrial vulcanization temperature of the rubber composition is generally about 190°C at the maximum. For example, in the case where the highest vulcanization temperature is set at this 190°C, the melting point of the low-melting-point resin is usually selected within a range of less than 190°C, is preferably 180°C or less, and more preferably 170°C or less.

As the low-melting-point resin, a polyolefin resin is preferable. Examples thereof include polyethylene, polypropylene, polybutene, polystyrene, ethylene-propylene copolymers, ethylene-methacrylic acid copolymers, ethylene-ethyl acrylate copolymers, ethylene-propylene-diene terpolymers, ethylene-vinyl acetate copolymers, and ionomer resins.

The hydrophilic short fibres have an average length of preferably from 0.1 to 50 mm, more preferably from 1 to 7 mm, and an average diameter of preferably from 1 $\mu$m to 2 mm, more preferably from 5 $\mu$m to 0.5 mm.

When the average length and the average diameter are within the ranges described above, the short fibres may not be entangled more than necessary, and satisfactory dispersibility can be achieved.

The amount of the hydrophilic short fibres blended is preferably in the range from 0.1 to 100 parts by mass, more preferably in the range from 1 to 50 parts by mass, and even more preferably in the range from 1 to 10 parts by mass based on 100 parts by mass in total of the diene polymer. Setting the amount of the hydrophilic short fibres blended within the range described above enables a satisfactory balance between on-ice performance and wear resistance to be achieved.

[Blowing Agent]

Further, the rubber composition of the present invention preferably contains a blowing agent. In the case where the rubber composition contains a blowing agent, during production of vulcanized rubber by vulcanization of the rubber composition, gas bubbles resulting from the blowing agent are generated in the vulcanized rubber. Accordingly, when a tyre is produced using a rubber composition containing a blowing agent in a tread, the on-ice performance of the tyre can be further improved by a scratching effect and a drainage effect caused by the gas bubbles in the tread.

Examples of the blowing agent include blowing agents such as azodicarbonamide (ADCA), dinitrosopentamethylenetetramine (DNPT), dinitrosopentastyrenetetramine, benzenesulfonyl hydrazide derivatives, p,p'-oxybisbenzenesulfonyl hydrazide (OBSH), ammonium bicarbonate, sodium bicarbonate, ammonium carbonate, nitrososulfonyl azo compounds, N,N'-dimethyl-N,N'-dinitrosophthalamide, toluenesulfonyl hydrazide, p-toluenesulfonyl semicarbazide, and p,p'-oxybisbenzenesulfonyl semicarbazide. Among the blowing agents, dinitrosopentamethylenetetramine (DNPT) is preferable. One of the blowing agents may be used alone, or two or more of the blowing agents may be used in combination.

The amount of the blowing agent blended is not particularly limited, but is preferably in the range from 0.1 to 30 parts by mass, more preferably in the range from 1.0 to 20 parts by mass, and even more preferably in the range from 2.0 to 10 parts by mass based on 100 parts by mass in total of the diene polymer.

Furthermore, the above-described blowing agent is preferably used in combination with a blowing auxiliary agent such as urea, zinc stearate, zinc benzenesulfinate, and zinc white. One of the blowing auxiliary agents may be used alone, or two or more of the blowing auxiliary agents may be used in combination. Use of the blowing auxiliary agent in combination facilitates a foaming reaction to enhance the degree of completion of the reaction, and enables unnecessary degradation over time to be inhibited.

The amount of the blowing auxiliary agent blended is not particularly limited, but is preferably in the range of 1 to 30 parts by mass based on 100 parts by mass in total of the diene polymer.

The expansion ratio of a vulcanized rubber obtained after vulcanizing the rubber composition containing the above-described blowing agent is sequentially, from 0.1 to 50%, usually from 1 to 50%, more preferably from 5 to 40%, from 15 to 40%, from 20 to 40%, from 25 to 40%, from 30 to 40%, even more preferably, from 31 to 40%, and particularly preferably from 32 to 40%. In the case where a blowing agent is blended, if the expansion ratio is excessively large, the voids on the rubber surface also become large, and thus, a sufficient ground contact area may not be achieved. When the expansion ratio is within the above range, formation of gas bubbles that effectively functions as drainage ditches is achieved while an amount of gas bubbles can be moderately retained, and thus, the durability may not be compromised.

The tyre of the present invention is intended for a time after a slight snowfall in an urban area, where the outside temperature is -5°C or higher and a period just before spring having a large amount of the thawed snow, and is intended for an environment where a water film sufficiently exists between an ice and snow road surface and the tyre. Many of the studless tyres so far are intended for severely cold regions or heavy snowfall areas, and the amount of water films present on ice and snow road surfaces is small in such environments. Therefore, more preferable is a sufficient expansion ratio from 30 to 40 %, which is much higher than the expansion ratio of the studless tyres so far.

To the rubber composition used in the tyre of the present invention, additives to be blended to ordinary rubber compositions can be added to such an extent at which the effects of the present invention are not deteriorated. For example, it is possible to blend additives usually used in the rubber industry, such as an anti-oxidant, a vulcanization accelerator, a vulcanizing agent such as sulfur, zinc oxide, stearic acid, and an ozone deterioration inhibitor, appropriately. The rubber composition used in the tyre of the present invention is obtained by kneading using a kneader, for example, an open kneader such as a roll or a hermetically sealed kneader such as a Banbury mixer. After subjected to molding followed by vulcanization, the rubber composition can be applied to various rubber products.

Example 1

Hereinafter, the embodiments of the present invention will be described in further detail with reference to examples and comparative examples, but the present invention are not limited to these examples.

[Production Example 1: Synthesis of Modified Polybutadiene Rubber]

(i) Preparation of Catalyst

Into a dried 100 mL reaction glass vessel, purged with nitrogen, and kept airtight with a rubber cap, 7.11 g (15.2% by mass) of a solution of butadiene in cyclohexane, 0.59 mL of a solution of neodymium neodecanoate in cyclohexane (0.56 M (mol/L)), 10.32 mL of a solution of methylaluminoxane (PMAO, manufactured by Tosoh Akzo Corporation) in toluene (3.23 M in terms of aluminum concentration), and 7.77 mL of a solution of diisobutylaluminum hydride (manufactured by Kanto Chemical Co., Inc.) in hexane (0.90 M) were introduced and left at room temperature for 2 minutes. Then, 1.45 mL of a solution of diethylaluminumchloride (manufactured by Kanto Chemical Co., Inc.) in hexane (0.95 M) was added thereto, and intermittent stirring at room temperature was continued for 15 minutes.
The concentration of neodymium in the resulting catalyst solution was 0.011 M.

(ii) Production of Modified Diene Rubber Having Modified Active End

Into a dried 900 mL reaction glass vessel, purged with nitrogen, and kept airtight with a rubber cap, a dried and purified solution of butadiene in cyclohexane and dried cyclohexane were each introduced to obtain 400 g of a 12.5% by mass solution of butadiene in cyclohexane.
Next, 2.28 mL of the prepared catalyst solution (0.025 mmol in terms of neodymium) was introduced thereto, and polymerisation was carried out in a 50°C hot water bath for 1.0 hour.

(iii) Primary Modification Treatment

As a primary modifier, 23.5 equivalents (molar equivalent with respect to neodymium) of a solution of 3-glycidoxypropyltrimethoxysilane (1.0 M) in hexane was introduced, and a treatment at 50°C was carried out for 60 minutes.

(iv) Subsequent Treatment

Subsequently, 1.2 mL of sorbitan trioleate as a carboxylate of a polyhydric alcohol was added by itself, and a modification reaction was further carried out at 50°C for 1 hour. Thereafter, 2 mL of a 5% solution of an anti-oxidant 2,2'-methylene-bis(4-ethyl-6-t-butylphenol) (Nocrac NS-5) in 2-propanol was added to quench the reaction. Further, reprecipitation was performed in 2-propanol containing a small amount of NS-5. The precipitate was dried in a drum to provide polybutadiene having a modified active end. The glass transition temperature of the obtained modified polybutadiene rubber was -110°C.

[Production of Vulcanized Rubber Sample]

The rubber compositions shown by blends in Table 1 were kneaded in accordance with a routine method and further vulcanized at 145°C for 33 minutes to obtain vulcanized rubber samples.

[Production of Test Tyre]

The rubber compositions obtained using the blend of Table 2 were used for the tread portion to mold tyres of 195/65R15, and the tyres molded were heated at 160°C for 15 minutes to complete vulcanization. Thereby, tyres for tests of Example 5 and Comparative Example 4 were produced. The blend is identical to that in Table 1, but when the tyres were produced, the expansion ratio was different.
The expansion ratio $V_s$ is represented by the following equation:

$$V_S= \{ (\rho0 - \rho g) / (\rho l - \rho g) - 1\} \times 100 \ (\%) \ (1)$$

where $\rho l$ is the density (g/cm$^3$) of the foamed rubber, $\rho0$ is the density (g/cm$^3$) of the rubber solid phase portion of the foamed rubber, and $\rho g$ is the density (g/cm$^3$) of the gas portion in the air bubbles of the foamed rubber. The foamed rubber is composed of a rubber solid phase portion and cavities (closed cells) formed by the rubber solid phase portion, that is, a gas portion in gas bubbles. Since the density pg of the gas portion is significantly small, practically close to zero, and extremely small relative to the density $\rho l$ of the rubber solid phase portion, the above equation (1) can be expressed by the following equation.

$$V_S = (\rho0/\rho l - 1) \times 100 \ (\%) \ (2)$$

Actually, a block-shaped sample from the foamed rubber phase of the tread of the test tyre, which had been left to stand for one week after vulcanization, was made into a thin piece having a thickness of 5 mm. The density of the thin piece was measured, additionally, the density of the tread of the non-foamed rubber (solid phase rubber) was measured, and the expansion ratio $V_S$ was determined using the above equation (2).

[Average Expansion Diameter]

A block-shaped sample was cut out from the vulcanized rubber sample or the foamed rubber phase of the tread of the test tyre, made image with an optical microscope having a magnification from 100 to 400, from which diameters of 200 or more closed cells were measured and indicated as an arithmetic average value.

[Storage Elastic Modulus G']

The vulcanized rubber obtained by vulcanizing each rubber composition shown in Table 1 at 145°C for 33 minutes was measured for its storage elastic modulus G', using a rheometer (manufactured by Rheometrics) under conditions of a temperature of 30°C, a strain of 10%, and a frequency of 15 Hz.
Also, the tread of each test tyre shown in Table 2 was cut out, and the storage elastic modulus G 'was measured using a rheometer (manufactured by Rheometrics) under the conditions of a temperature of 30°C, a strain of 10%, and a frequency of 15 Hz. The measured value was indicated by an index based on the valus for the tyre of Comparative Example 4 as 100.

[Evaluation of On-ice Performance]

When the vulcanized rubber having a length of 25 mm, a width of 25 mm, and a thickness of 2 mm was pressed onto secured ice and rotated, the frictional force generated was detected with a load cell, and the dynamic friction coefficient $\mu$ was calculated. The measurement temperature was set to -2°C, the surface pressure was set to 12 kgf/cm$^2$, and the peripheral speed of rotation of the sample was set to 20 cm/sec.
The calculated value was indicated by an index based on the dynamic friction coefficient $\mu$ of Comparative Example 1 as 100. The larger the index value, the larger the dynamic friction coefficient $\mu$, which indicates that the on-ice performance is satisfactory.

[Braking Performance on Ice]

The tyre samples shown in Table 2 were first subjected to a 200 km normal running as running-in, and then subjected to the following measurement tests. Four tyres for each test tyre were mounted on a passenger car having a displacement of 1500 cc, and the braking distance was measured on ice at an outside temperature of -5°C. The measured

EP 3 725 828 A1

value was indicated by an index based on the value for the tyre of Comparative Example 1 as 100. A larger index indicates that braking is more satisfactory.

[Table 1]

| | | | Example | | | | Comparative Example | | |
|---|---|---|---|---|---|---|---|---|---|
| | | | 1 | 2 | 3 | 4 | 1 | 2 | 3 |
| Rubber component | Natural Rubber *1 | Parts by weight (phr) | 30 | 30 | 30 | 30 | 50 | 30 | 30 |
| | Modified polybutadiene rubber*2 | | | | | | 50 | | |
| | Styrene butadiene rubber *3 | | 70 | 70 | 70 | 70 | | 70 | 70 |
| Blend component | Carbon black N134 *4 | | | | | | 35 | | |
| | Carbon black N220 *5 | | 10 | 10 | 10 | 10 | | 10 | 10 |
| | Silica *6 | | 50 | 50 | 50 | 50 | 35 | 50 | 50 |
| | Process oil *7 | | 15 | 15 | 15 | 15 | 15 | 15 | 15 |
| | Stearic acid | | 2 | 2 | 2 | 2 | 2 | 2 | 2 |
| | Zinc white | | 2 | 2 | 2 | 2 | 2 | 2 | 2 |
| | Anti-oxidant *8 | | 2 | 2 | 2 | 2 | 2 | 2 | 2 |
| | $C_5$ resin *9 | | | | | | 15 | | |
| | Phenol resin *10 | | | 10 | | 10 | | | |
| | Cashew modified Phenol resin *11 | | 10 | | 10 | | | | |
| | Hexamethoxymethylmelamine | | 5 | 5 | 5 | 5 | | | |
| | Vulcanization Accelerator DM *12 | | 1 | 1 | 1 | 1 | 1 | 1 | 1 |
| | Vulcanization Accelerator CZ *13 | | 0.5 | 0.5 | 0.5 | 0.5 | 0.5 | 0.5 | 0.5 |
| | Sulfur | | 1.5 | 1.5 | 1.5 | 1.5 | 1.5 | 1.5 | 1.5 |
| | Blowing agent ADCA *14 | | 5 | 5 | 8 | 8 | 5 | 0 | 5 |
| Evaluation | (Expansion ratio(%) | | 25 | 19 | 39 | 36 | 23 | 0 | 25 |
| | Breaking performance on ice (Index) | | 95 | 83 | 101 | 92 | 100 | 67 | 94 |
| | Storage elastic modulus 10% G'(MPa) | | 1.86 | 1.91 | 1.77 | 1.85 | 1.49 | 2.01 | 1.5 |

[Table 2]

| | Example 5 | Comparative Example 4 |
|---|---|---|
| Blend | identical to Example 4 | identical to Comparative Example 1 |
| Expansion ratio(%) | 34 | 18 |
| Breaking performance on ice | 98 | 100 |
| Storage elastic modulus 30°C, 10% G'(MPa) | 1.98 | 1.52 |

*1 Natural rubber

*2 Modified polybutadiene rubber; modified polybutadiene rubber of Production Example 1 described below

*3 Styrene-butadiene rubber, trade name: SBR # 1500 manufactured by JSR Corporation

*4 Carbon black; N134, $N_2SA$: 143 $m^2/g$, manufactured by Asahi Carbon Co., Ltd.

*5 Carbon black; N220, # 80 $N_2SA$: 122 $m^2/g$, manufactured by Asahi Carbon Co., Ltd.

*6 Silica: manufactured by Tosoh Silica Corporation, Nipsil AQ (CTAB 165 $m^2/g$, BET value 205 $m^2/g$)

*7 Process oil, trade name: Diana Procell Oil NS-24

*8 Anti-oxidant, Comparative Example 1: IPPD (N-isopropyl-N'-phenyl-p-phenylenediamine), the others (Comparative Example 2 to 3, Example 1 to 2): 6PPD (N-Phenyl-N'-(1,3-dimethylbutyl)-p-phenylenediamine))

*9 $C_5$ resin: T-REZ RA100, manufactured by Tonen Chemical Corporation

*10 Phenol resin, Sumilite Resin PR-19900, manufactured by Sumitomo Bakelite Co., Ltd.

*11 Cashew-modified phenol resin, trade name: PR-12686, manufactured by Sumitomo Bakelite Co., Ltd.

*12 Vulcanization accelerator, DM: dibenzothiazolyl disulfide

*13 Vulcanization accelerator, CZ: N-cyclohexyl-2-benzothiazolylsulfenamide

*14 Blowing agent: ADCA (azodicarbonamide)

[Examples 1 to 4 and Comparative Examples 1 to 3]

As shown in Table 1, the rubber compositions of Examples 1 to 4 have better G'(MPa), which indicates the normal road performance, and has better or no significant deterioration in the on-ice performance, in comparison with the rubber compositions of Comparative Examples 1 to 3.

[Examples 5 and Comparative Examples 4]

As shown in Table 2, the tyre of Example 5 has better G'(MPa), which indicates the normal road performance, and has comparable on-ice performance, in comparison with the tyre of Comparative Example 4. The tyre of Example 5 has an excellent balance between the normal road performance and the on-ice performance.

Industrial Applicability

The tyre of the present invention can be suitably applied as a studless tyre for all seasons.

**Claims**

1.   A tyre comprising a foamed rubber on a surface of a tread rubber, the foamed rubber being constituted from a rubber composition in which a phenol resin is blended.

2.   The tyre described in claim 1, wherein a methylene donor is blended as a curing agent in the rubber composition.

3.   The tyre described in claim 1 or 2, wherein the rubber composition has an expansion ratio from 0.1 to 50%.

4.   The tyre described in any one of claims 1 to 3, comprising 1.0 to 20 parts by mass of a blowing agent based on 100 parts by mass of a rubber component in the rubber composition.

5.   The tyre described in any one of claims 1 to 4, comprising 30 to 100 parts by mass of carbon black and/or silica in a total amount based on 100 parts by mass of the rubber component in the rubber composition.

6.   The tyre described in any one of claims 1 to 5, comprising a hydrophilic short fibre.

7.   The tyre described in any one of claims 2 to 6, wherein the methylene donor is hexamethylene tetramine and/or hexamethoxymethyl melamine.

8.   The tyre described in any one of claims 1 to 7, comprising at least one of styrene-butadiene rubber as a rubber component.

9.   The tyre described in claim 8, further comprising a natural rubber and/or a polyisoprene rubber as the rubber component.

**10.** The tyre described in claims 1 to 9, wherein the rubber composition has an expansion ratio from 31 to 40%.

# INTERNATIONAL SEARCH REPORT

| International application No. |
|---|
| PCT/JP2018/046141 |

**A. CLASSIFICATION OF SUBJECT MATTER**
Int.Cl.    C08J9/06(2006.01)i,    B60C11/00(2006.01)i,    C08K3/04(2006.01)i,
           C08K3/36(2006.01)i, C08L21/00(2006.01)i, C08L61/04(2006.01)i

According to International Patent Classification (IPC) or to both national classification and IPC

**B.  FIELDS SEARCHED**

Minimum documentation searched (classification system followed by classification symbols)
Int.Cl. C08J9/06, B60C11/00, C08K3/04, C08K3/36, C08L21/00, C08L61/04

Documentation searched other than minimum documentation to the extent that such documents are included in the fields searched
      Published examined utility model applications of Japan        1922-1996
      Published unexamined utility model applications of Japan       1971-2019
      Registered utility model specifications of Japan               1996-2019
      Published registered utility model applications of Japan       1994-2019

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y | JP 2012-236951 A (THE YOKOHAMA RUBBER CO., LTD.)<br>06 December 2012, claims, paragraphs [0016],<br>[0020]-[0021], [0023], [0029]-[0030], [0037],<br>examples 1-3 (Family: none) | 1-2, 4-5, 7-9<br>3, 6, 10 |
| Y | JP 2014-234127 A (SUMITOMO RUBBER INDUSTRIES,<br>LTD.) 15 December 2014, paragraph [0027], examples<br>1, 7 (Family: none) | 3, 10 |
| Y | WO 2017/126632 A1 (BRIDGESTONE CORPORATION) 27<br>July 2017, claims 12, paragraph [0053], example 3<br>(Family: none) | 6 |
| A | JP 2017-203071 A (THE YOKOHAMA RUBBER CO., LTD.)<br>16 November 2017, entire text (Family: none) | 1-10 |
| A | WO 2017/209264 A1 (BRIDGESTONE CORPORATION) 07<br>December 2017, entire text (Family: none) | 1-10 |

☐  Further documents are listed in the continuation of Box C.       ☐   See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 March 2019 (04.03.2019) | 19 March 2019 (19.03.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

**Patent documents cited in the description**

- JP 8300904 A